# EUROPEAN PATENT SPECIFICATION

(11) **EP 3 067 264 B1**
(45) Date of publication and mention of the grant of the patent: **05.05.2021**
(21) Application number: 15159095.7
(22) Date of filing: 13.03.2015
(51) Int. Cl.: B62M 11/16

(54) **Driving control system of internal clutch**
Antriebssteuerungssystem einer internen Kupplung
Système de commande d'entraînement d'un embrayage interne

(43) Date of publication of application: 14.09.2016
(73) Proprietor: NEW KAILUNG GEAR CO., LTD., Kaohsiung (TW)
(72) Inventor: Liu, Jen-Chih, Kaohsiung (TW)
(74) Representative: Treeby, Philip David William

(56) References cited:
- EP-A1- 1 172 291
- JP-A- H0 565 094
- US-A- 4 065 984
- US-A- 5 556 354

## Description

### FIELD OF THE INVENTION

The present invention related to a driving control system of an internal clutch, wherein driving rods of different control units of the internal clutch of a bike are driven by the same cam; the cam controls movements of the driving rods to precisely control movements and operation sequences of the first, second and third control units. Various control sequences for controlling the movements of the driving rods are not overlapped; and the cam is one of an axial plane cam, a radial cam, an inner cam, an outer cam or a cam-like component.

### BACKGROUND OF THE INVENTION

The control mechanism of an internal clutch of a bicycle is complicated and also is heavy, expensive and has a large volume. Meanwhile, it is insensitive in operation so as to deteriorate the quality of a bicycle. Therefore, it is eager to develop and improve the prior art internal clutch of a bicycle.

Other than the designs of gears and paths of the internal clutch, to improve the driving rods and other structural elements of the internal clutches is related to the structures, weights and costs, sensitivity and preciseness in controlling. Therefore, there is an eager demands to have an internal clutch of a bike which has a simple structure, a light weight and a low cost, high sensitivity and high preciseness in controlling. The prior art document US4065984A discloses a driving control system of an internal clutch according to the preamble of claim 1.

### SUMMARY OF THE INVENTION

The structure of the present invention has a simple structure, less elements, a small volume, which can save storage spaces effectively and reduce the weight thereof. Furthermore cost is reduced so as to promote the usage in use. The structure of the internal clutch of a bicycle is simplified effectively for improving the efficiency in assembly and repairing so as to increase the usages in industry and thus is economic. Furthermore in the present invention, the driving rods of the clutch units of the internal clutch are controlled by only one cam. By rotation of the cam, all the driving rods are displaced easily and precisely controlled so as to drive the control units of the internal clutches to achieve the object of speed changes of the control units.

According to the present invention there is provided a driving control system of an internal clutch comprising: at least one planet gear system and at least one cam; a first control unit for switching a power input to be from a planet gear frame or from an inner gear; the first control unit being by the cam through a first driving rod; a second control unit for controlling a sun gear to be at a power output state or at a releasing state; the second control unit being driven by the cam through a second driving rod; and a third control unit for controlling a power output to be from a planet gear frame or from an output power of an inner gear; the third control unit being driven by the cam through a third driving rod; wherein the first driving rod, the second driving rod and the third driving rod are driven by the same cam; the cam controls movements of the first, second and third driving rods to precisely control movements and moving sequence of the first, second and third control units, characterized by moving tracks of the first, second and third driving rods are one of a leftward and rightward moving track, an upward and downward moving track and a rotational moving track, and control sequences for controlling the movements of the driving rods are not overlapped.

The cam is one of an axial plane cam, a radial cam, an inner cam, an outer cam or a cam like assembly.

In order that the present invention be more readily understood specific embodiments thereof will now be described.

### BRIEF DESCRIPTION OF the DRAWINGS

Fig. 1 is a cross sectional view of the present invention.
Fig. 2 is a schematic view showing a five stage speed change using a star gear set according to the present invention.
Fig. 3 shows a sequence table of the structure shown in Fig. 2.
Fig. 4 is a simplifying table of Fig. 3.
Fig. 5 is a schematic view showing tracks in one embodiment of the present invention.
Fig. 6 is a schematic view showing the track in another embodiment of the present invention.

### DESCRIPTION OF THE INVENTION

In order that those skilled in the art can further understand the present invention, a description will be provided in the following in details.

However, these descriptions and the appended drawings are only used to cause those skilled in the art to understand the objects, features, and characteristics of the present invention, but not to be used to confine the scope and spirit of the present invention defined in the appended claims.

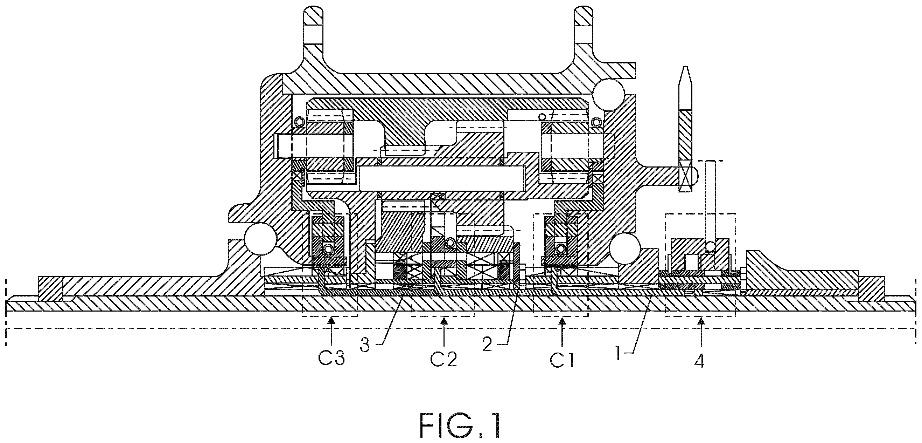

Referring to Fig. 1, a driving structure for an internal clutch according to the present invention is illustrated. The internal clutch has at least one planet gear system and a control structure for controlling the planet gear system. The control unit of the present invention includes the following elements.

A cam 4 is included
A first control unit C1 for switching a power input state to be from a planet gear frame A or from an inner gear R; the first control unit C1 is connected to the cam 4 through a first driving rod 1;
A second control unit C2 for controlling a sun gear to be at a power output state or at a releasing state; the second control unit C2 is connected to the cam 4 through a second driving rod 2; and
A third control unit C3 for controlling a power output state to be from a planet gear frame A or from an output power of an inner gear R; the third control unit C3 is connected to the cam 4 through a third driving rod 3.

The feature of the present invention is that the first driving rod 1, the second driving rod 2 and the third driving rod 3 are driven by the same cam 4. By designing the cam to control movements of the first, second and third driving rods to precisely control movements and operation sequence of the first, second and third control units C1, C2 and C3 so that only one cam 4 can precisely control the first, second and third driving rods C1, C2 and C3. In the present invention, the cam 4 may be one of an axial plane cam, a radial cam, an inner cam, an outer cam or other similar cams. In this description, a plane cam is used as an example, however, other kinds of cams are usable in the present invention, which is not used to confine the scope of the present invention.

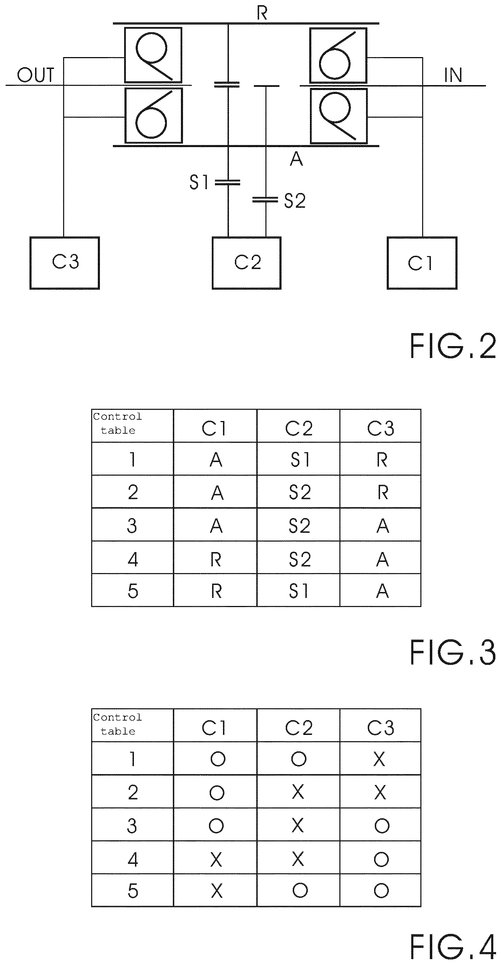

Referring to Fig. 2, a star-gear form five stage clutch is used as an example. In this embodiment, a five stage clutch is used as an example. The clutch comprises the following elements.

A first control unit C1 serves for switching a power input state to be from a planet gear frame A or from an inner gear R.

A second control unit C2 serves for controlling a sun gear to be at a power output state (S1) or at a releasing state (S2).

A third control unit C3 for controlling a power output state to be from a planet gear frame A or from an output power of an inner gear R.

The speed change stages of the first control unit C1, the second control unit C2 and the third control unit C3 are arranged as those shown in the Fig. 3. Then the A in the first control unit C1 is defined as O, R is defined as X; the S1 in the second control unit C2 is defined as O, S2 is defined as X; the A in the third control unit C3 is defined as O, R is defined as X; and then the Fig. 4 is get.

The various states of the first, second and third control units are listed in Fig. 3. Then the states A and S1 in Fig. 3 is defined as O and the states R and S2 are defined as X as a result a table as those shown in Fig. 4 is got.

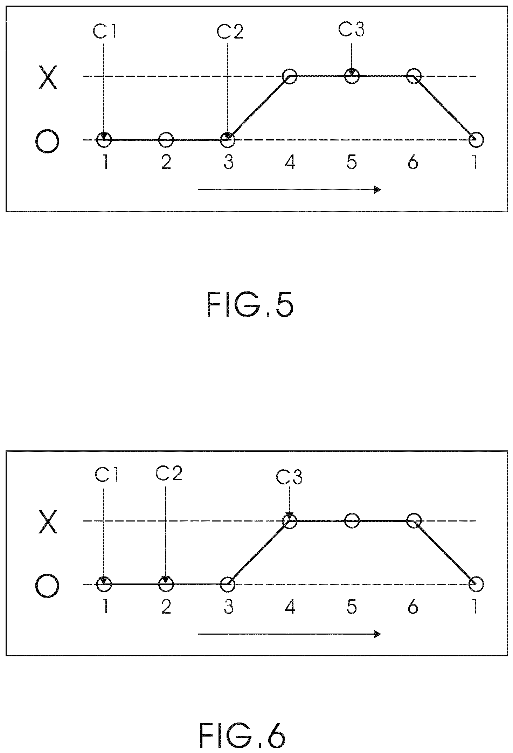

Referring to Fig. 4, in that the first control unit C1, the second control unit C2 and the third control unit C3 are designed as to be controlled by one element (the cam 4), as illustrated in Fig. 5. In the present invention, only that the control units C1, C2 and C3 are controlled to match the sequence of OOOXXX and the sequence has no overlapped, Then the sequence is usable.

Furthermore in the present invention, the control units C1, C2 and C3 may be simplified and some stages are not used so that five stage speed change can be simplified as two stages or three stages speed change, that is no S2 and on the control unit C2, than a three stage speed change is formed. Based on this principle, the structure can be expanded as two sets of five stage speed change system so as to change to elements so as to 25 (5x5) speed change.

With reference to Fig. 1, in this embodiment, the control units C1, C2 and C3 are controlled transversally and the cam 4 (such as an axial plane cam) is used to control the driving rods 1, 2 and 3 of the control units C1, C2 and C3. Each driving rods 1, 2 and 3 are moved transversally along a left and right side path. Based on above mentioned principle, it is defined that the leftward movement of each driving rod 1, 2, or 3 is defined as X (referring to Fig. 4), and then using the track in Fig. 5 to form a track of the cam 4, by the rotation of the cam 4 (i. e., rotation of the track), the driving rods 1, 2 and 3 move leftwards and rightwards precisely so as to control the clutching operation of the control units C1, C2 and C3 to have the effect of speed change. The operation and rotation of the cam 4 may be realized by a linear wheel or by electric driving and other ways.

## Claims

1. A driving control system of an internal clutch comprising:
at least one planet gear system and at least one cam (4);
a first control unit (C1) for switching a power input to be from a planet gear frame (A) or from an inner gear (R); the first control unit (C1) being by the cam (4) through a first driving rod (1);
a second control unit (C2) for controlling a sun gear to be at a power output state (S1) or at a releasing state (S2); the second control unit (C2) being driven by the cam (4) through a second driving rod (2); and **characterised by**
a third control unit (C3) for controlling a power output to be from a planet gear frame (A) or from an output power of an inner gear (R); the third control unit (C3) being driven by the cam (4) through a third driving rod (3);
and the first driving rod (1), the second driving rod (2) and the third driving rod (3) are driven by the same cam (4); the cam (4) controls movements of the first, second and third driving rods to precisely control movements and moving sequence of the first, second and third control units, and by
moving tracks of the first, second and third driving rods are one of a leftward and rightward moving track, an upward and downward moving track and a rotational moving track, and control sequences for controlling the movements of the driving rods are not overlapped.

2. The driving control system of an internal clutch as claimed in claim 1, wherein the cam (4) is one of an axial plane cam, a radial cam, an inner cam, an outer cam or a cam like assembly.

## Patentansprüche

1. Antriebssteuerungssystem einer internen Kupplung, das Folgendes umfasst:
mindestens ein Planetengetriebesystem und mindestens einen Nocken (4);
eine erste Steuereinheit (C1) zum Umschalten eines Krafteingangs dazu, von einem Planetengetrieberahmen (A) oder von einem Innenrad (R) zu sein; wobei die erste Steuereinheit (C1) über eine erste Antriebsstange (1) von dem Nocken (4) angetrieben wird;
eine zweite Steuereinheit (C2) zum Steuern eines Sonnenrads dazu, sich in einem Kraftausgangszustand (S1) oder in einem Freigabezustand (S2) zu befinden; wobei die zweite Steuereinheit (C2) über eine zweite Antriebsstange (2) von dem Nocken (4) angetrieben wird; und **gekennzeichnet durch**
eine dritte Steuereinheit (C3) zum Steuern eines Kraftausgangs dazu, von einem Planetengetrieberahmen (A) oder von einer Ausgangskraft eines Innenrads (R) zu sein; wobei die dritte Steuereinheit (C3) über eine dritte Antriebsstange (3) von dem Nocken (4) angetrieben wird; und
**dadurch, dass** die erste Antriebsstange (1), die zweite Antriebsstange (2) und die dritte Antriebsstange (3) von demselben Nocken (4) angetrieben werden; der Nocken (4) die Bewegungen der ersten, der zweiten und der dritten Antriebsstange steuert, um die Bewegungen und den Bewegungsablauf der ersten, der zweiten und der dritten Steuereinheit genau zu steuern, und **dadurch, dass**
es sich bei Bewegungsbahnen der ersten, der zweiten und der dritten Antriebsstange um eine von einer Bewegungsbahn nach links und nach rechts, einer Bewegungsbahn nach oben und nach unten und einer drehenden Bewegungsbahn handelt und
Steuerungsabläufe zum Steuern der Bewegungen der Antriebsstangen einander nicht überlappen.

2. Antriebssteuerungssystem einer internen Kupplung nach Anspruch 1, wobei es sich bei dem Nocken (4) um einen von einem Axialebenennocken, einem Radialnocken, einem inneren Nocken, einem äußeren Nocken und einer nockenartigen Anordnung handelt.

## Revendications

1. Système de commande d'entraînement d'un embrayage interne comportant :
au moins un système d'engrenage planétaire et au moins une came (4) ;
une première unité de commande (C1) servant à commuter une entrée de puissance pour qu'elle provienne d'un cadre d'engrenage planétaire (A) ou d'un engrenage intérieur (R) ; la première unité de commande (C1) étant entraînée par la came (4) par le biais d'une première tige d'entraînement (1) ;
une deuxième unité de commande (C2) servant à commander un planétaire pour le mettre dans un état de sortie de puissance (S1) ou dans un état de libération (S2) ; la deuxième unité de commande (C2) étant entraînée par la came (4) par le biais d'un deuxième tige d'entraînement (2) ; et **caractérisé par**
une troisième unité de commande (C3) servant à commander une sortie de puissance pour qu'elle provienne d'un cadre d'engrenage planétaire (A) ou d'une puissance de sortie d'un engrenage intérieur (R) ; la troisième unité de commande (C3) étant entraînée par la came (4) par le biais d'une troisième tige d'entraînement (3) ; et
la première tige d'entraînement (1), la deuxième tige d'entraînement (2) et la troisième tige d'entraînement (3) sont entraînées par la même came (4) ; la came (4) commandant les mouvements des première, deuxième et troisième tiges d'entraînement pour commander avec précision les mouvements et toute séquence de mouvement des première, deuxième et troisième unités de commande, et par des rails mobiles des première, deuxième et troisième tiges d'entraînement qui sont l'un parmi un rail mobile allant vers la gauche et vers la droite, un rail mobile allant vers le haut et vers le bas et un rail mobile de rotation, et les séquences de commande servant à commander les mouvements des tiges d'entraînement ne se chevauchent pas.

2. Système de commande d'entraînement d'un embrayage interne selon la revendication 1, dans lequel la came (4) est l'une parmi une came dans le plan axial, une came radiale, une came intérieure, une came extérieure ou un ensemble similaire à une came.
